# EUROPEAN PATENT APPLICATION

(11) **EP 4 696 884 A1**
(43) Date of publication of application: **18.02.2026**
(21) Application number: 24194846.2
(22) Date of filing: 16.08.2024
(51) Int. Cl.: F03D 7/02

(54) **WIND TURBINE ROTOR BLADE PITCH SYSTEM**

(71) Applicant: Siemens Gamesa Renewable Energy A/S, 7330 Brande (DK)
(72) Inventor: Brill, Anthony, Longmont, 80504 (US); Kristensen, Mikkel Aggersbjerg, 7400 Herning (DK); Pierce, Kirk, Lafayette, 80026 (US)
(74) Representative: SGRE-Association

(57) **Abstract**

The invention describes a wind turbine rotor blade pitch system (1) comprising, for each rotor blade (20) of a wind turbine (2): a hydraulic cylinder (10) and a means of converting a linear displacement of the cylinder piston rod (10R) into a rotational displacement of that rotor blade (20); an accumulator (11) adapted to provide pressurised hydraulic fluid to the cap-end chamber (101) of the hydraulic cylinder (10) or to the rod-end chamber (102) of the hydraulic cylinder (10); and a hydraulic circuit (12) comprising a primary return line (L1) connecting the rod-end chamber (102) to the accumulator (11); a secondary return line (L2) connecting the rod-end chamber (102) to a fluid reservoir (19); and a means (122V, 124V) of opening the secondary return line (L2) to divert hydraulic fluid to the fluid reservoir (19); which pitch system (1) further comprises a pitch controller (1C) adapted to actuate the line opening means (122V, 124V) of a hydraulic circuit (12). The invention further describes a method of controlling such a wind turbine rotor blade pitch system (1).

## Description

### Background

A wind turbine is generally equipped with a pitch system to turn the rotor blades into or out of the wind as required. In an established configuration, a hydraulic pitch system can comprise one or more hydraulic cylinders and a linkage installed at the base of each rotor blade. The wind turbine controller continually determines the optimal pitch angle for each rotor blade and issues corresponding pitch references to a pitch controller, which responds by generating control signals for the hydraulic actuators so that the rotor blades are turned to their desired pitch positions. Pitch references can be issued to increase or decrease the aerodynamic rotor speed, for example. It is important that a rotor blade is turned quickly enough to follow or "track" its pitch reference, since pitch error can result in unfavourable loading and potentially serious damage.

In a hydraulic pitch system, a pressurized fluid is used to effect a linear displacement of a piston rod by forcing fluid into either the cap-end chamber or the rod-end chamber of the cylinder. In a commonly deployed configuration, the piston rod retracts when fluid is forced into the rod-end chamber to pitch the rotor blade into the wind; the piston rod extends when fluid is forced into the cap-end chamber to pitch the rotor blade out of the wind. The pressurized fluid to a hydraulic cylinder is provided by an accumulator. The hydraulic circuit of each rotor blade can have its own accumulator, and the rotor blades can be pitched individually.

The size of a hydraulic cylinder is determined by torque requirements of the pitch system during normal operation of the wind turbine, since the output torque is determined by the difference between the cap-end pressure and the rod-end pressure, and this in turn determines the minimum volume of pressurized hydraulic oil that must be available at any one time in the accumulator bank. In a typical hydraulic circuit, fluid that is forced out of a cylinder chamber is collected in a tank or reservoir, and a pump is actuated to transfer fluid from the tank back to the accumulator.

An accumulator bank can be installed in the wind turbine hub, and comprises several normal operation accumulators. Usually, the size of an accumulator bank - i.e. the number of accumulators and their capacities - is determined by the requirements of a controlled shutdown procedure in which the rotor blades are fully pitched to the "stop" position.

However, since accumulators are costly and add to the weight in the hub, a design goal is to reduce the number of accumulators to a minimum. Reducing weight in the wind turbine hub leads to significant cost savings on the turbine itself for other components. In one approach to reducing the size of the accumulator bank, the hydraulic circuit can be configured to include a return path from the rod-end chamber directly to the accumulator. For example, a check valve can be placed between the rod-end chamber and the normal operation accumulators. The check valve will open the return path when the difference in pressure between the rod-end chamber and the normal operation accumulators exceeds the check valve cracking pressure. Providing a return path directly from the rod-end chamber to an accumulator allows use of fewer accumulators, thereby reducing weight in the wind turbine hub.

As explained above, the output torque is directly related to the difference between cap-end pressure and rod-end pressure. In the above configuration with a return path to the accumulator, fluid cannot exit the rod-end chamber until the rod-end pressure exceeds the normal operation accumulator pressure, so that the hydraulic cylinder has a lower torque output when pitching out of the wind. Under normal circumstances, the lower torque output does not present a problem. However, under certain unfavourable conditions, the output torque may be insufficient to ensure satisfactory pitch tracking when pitching out, and the wind turbine controller may interpret this as a fault and respond by initiating a shutdown sequence, leading to loss of earnings until the wind turbine is restarted.

It is therefore an object of the invention to provide an improved hydraulic circuit for a wind turbine rotor blade pitch system.

This object is achieved by the claimed wind turbine rotor blade pitch system and by the claimed method of controlling such a wind turbine rotor blade pitch system.

### Description

In the context of the invention, a wind turbine rotor blade pitch system shall be understood to comprise a hydraulic cylinder arrangement and a hydraulic circuit for each rotor blade. Each rotor blade may be assumed to be equipped with a means of converting a linear displacement of its cylinder piston rod(s) into a rotational displacement. The hydraulic circuit of each rotor blade shall be understood to comprise a "normal operation" accumulator adapted to provide pressurised hydraulic fluid to the cap-end chamber(s) or to the rod-end chamber(s) of the hydraulic cylinder arrangement, as required. Such a pitch system further comprises a pitch controller to actuate the various valves of each hydraulic circuit in order to execute a pitching task, i.e. to pitch a rotor blade into the wind or to pitch a rotor blade out of the wind.

A hydraulic circuit of the inventive wind turbine rotor blade pitch system comprises a primary return line connecting the rod-end chamber to the accumulator; a secondary return line connecting the rod-end chamber to a fluid reservoir; and a means of opening the secondary return line to divert hydraulic fluid to the fluid reservoir. The inventive rotor blade pitch system further comprises a pitch controller adapted to actuate the line opening means of each hydraulic circuit.

An advantage of the inventive rotor blade pitch system is that, when pitching out during normal operation of the wind turbine, fluid can be returned directly from a cylinder's rod-end chamber back to its accumulator, instead of emptying the fluid into a reservoir or tank and then having to pump it back into the accumulator. The primary return line or "direct return path" allows the accumulator to have favourably compact dimensions, since pressurized fluid from the rod-end chamber can circulate between accumulator and cylinder during the current pitching task. In addition, the inventive rotor blade pitch system provides a means of circumventing the direct return path, allowing fluid from the rod-end chamber to empty into the fluid reservoir through the secondary return line. This additional "pressure relief path" quickly creates a favourably high pressure differential between cap-end chamber and rod-end chamber, so that the hydraulic cylinder can deliver a favourably high output torque. Even when the rotor blade is being pitched out against high loads, the output torque is sufficient to ensure satisfactory pitch tracking. The invention therefore avoids the situation, described in the introduction, in which insufficient output torque leads to poor pitch tracking, which in turn can lead to a shutdown decision even in the absence of any fault in the pitch system.

The number of accumulators of a wind turbine rotor blade pitch system is ultimately determined by the size of the pitch cylinder, which in turn is determined by the required torque capacity. Since the inventive pitch system includes an additional "pressure relief path", enabling a pitch cylinder to deliver a favourably high output torque, the pitch system can be designed to deploy a more compact pitch cylinder compared to an equivalent prior art pitch system.

According to the invention, the method of controlling such a wind turbine rotor blade pitch system comprises steps of measuring or estimating the loads acting on the rotor blades; evaluating the measured or estimated loads; and regulating the secondary return line on the basis of the current pitching task and the load evaluation.

According to the invention, a wind turbine comprises a number of rotor blades; an instance of the inventive rotor blade pitch system; and a wind turbine controller configured to issue commands to the pitch system during operation of the wind turbine. The wind turbine controller can be configured to implement the inventive method of controlling a rotor blade pitch system.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the hydraulic circuit of each rotor blade comprises a proportional valve arranged to direct fluid from an accumulator into either the cap-end chamber or rod-end chamber of a pitch cylinder, in order to pitch the rotor blade in the desired direction. The proportional valve can also be arranged to allow a chamber to empty into a reservoir.

The secondary return line of the inventive pitch system connects the rod-end chamber to the fluid reservoir or tank. The line opening means is therefore also arranged between the rod-end chamber and the fluid reservoir. This can be achieved in a number of ways. In one approach, the fluid line of the rod-end chamber is augmented by providing another path directly to the tank, and by providing an actuating valve, for example a 3-2 valve (a valve with three ports and two states) configured to open/close the paths as appropriate. In a more straightforward and therefore preferred embodiment of the invention, the secondary return line passes through the proportional valve, and the line opening means of the secondary return line is arranged between the rod-end chamber and the proportional valve.

Without restricting the invention in any way, it may be assumed that the hydraulic circuit of a rotor blade includes a check valve arranged in the primary return line, with a cracking pressure of a few bar. In the hydraulic circuit's "regenerative mode" of operation during a pitching out task, fluid is forced into the cap-end chamber, causing the pressure in the rod-end chamber to increase, and allowing fluid to return to the accumulator once the pressure differential exceeds the check valve's cracking pressure. For example, the pressure in the accumulator can be in the order of 250 bar, and the cracking pressure of the check valve in the primary return line can be in the order of 10 bar. In the hydraulic circuit's "non-regenerative mode" of operation during a pitching out task, the secondary return line or "pressure relief path" can be opened to allow fluid from the rod-end chamber to empty into the fluid reservoir.

In a particularly preferred embodiment of the invention, the line opening means in the secondary return line of a pitch system can be any suitable actuating valve, preferably a directional control valve (e.g. a 2-2 valve, a 3-2 valve, a 4-2 valve, a 4-3 valve, etc.). Since the actuating valve in the secondary return line allows switching between the regenerative mode of operation and the non-regenerative mode of operation, it is referred to herein as a "mode-select valve".

During normal operation of a wind turbine, its controller ("wind turbine controller") continually monitors relevant parameters such as wind speed, wind direction, rotor blade loading etc., and issues commands to the various wind turbine components with the aim of maximizing power output as long as the wind conditions are within safe operating limits. Such commands include rotor blade pitch references issued to the pitch system. The wind turbine controller also monitors the pitch tracking error of each rotor blade by comparing its pitch reference to the actual rotor blade pitch position.

In the inventive approach, if the pitch tracking error of a rotor blade increases towards an acceptable threshold during a pitching-out task, the wind turbine controller commands the pitch controller of the pitch system to actuate the line opening means of the corresponding hydraulic circuit so that its hydraulic cylinder arrangement can deliver the necessary output torque. The pitch system can then continue to pitch the rotor blade and correctly track the pitch reference.

Equally, the wind turbine controller can estimate loads on the rotor blades during a pitching-out task, and can command the pitch controller to actuate the line opening means of a hydraulic circuit if the corresponding rotor blade is being subject to excessively high loads. The pitch system can then continue to pitch the rotor blade and correctly track the pitch reference.

A wind turbine is generally equipped with an arrangement of strain sensors and/or other suitable load sensors, arranged to estimate loads on the rotor blades. According to the invention, the wind turbine controller is configured to command a pitch controller to actuate a line opening means of a hydraulic circuit when the corresponding rotor blade is subject to excessive loads during a pitching out task.

A wind turbine may also be equipped with a wind gust detector. According to the invention, the wind turbine controller is configured to command a pitch controller to actuate a line opening means of a hydraulic circuit when the corresponding rotor blade is being subject to excessive gusts during a pitching out task.

From the above, it is clear that the hydraulic circuit's "non-regenerative mode" is only required under certain circumstances in which the output torque of a hydraulic circuit may be insufficient to ensure correct pitch tracking of the corresponding rotor blade when pitching out. In all other pitching-out situations, the hydraulic circuit can operate in "regenerative mode", re-filling the accumulator as fluid is forced from the rod-end chamber. Therefore, the inventive method comprises maintaining the secondary return line in its closed state when the rotor blade loads are below acceptable or safe levels during a pitching-out task.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Figure 1: shows a known rotor blade pitch system;
- Figure 2: shows another known rotor blade pitch system;
- Figures 3 and 4: illustrate an embodiment of the inventive rotor blade pitch system;
- Figures 5 - 7: illustrate exemplary methods of controlling the hydraulic circuit of the pitch system of Figures 3 and 4;
- Figures 8 and 9: illustrate a further embodiment of the inventive rotor blade pitch system.

In the diagrams, like numbers refer to like objects throughout. Objects in the diagrams are not necessarily drawn to scale.

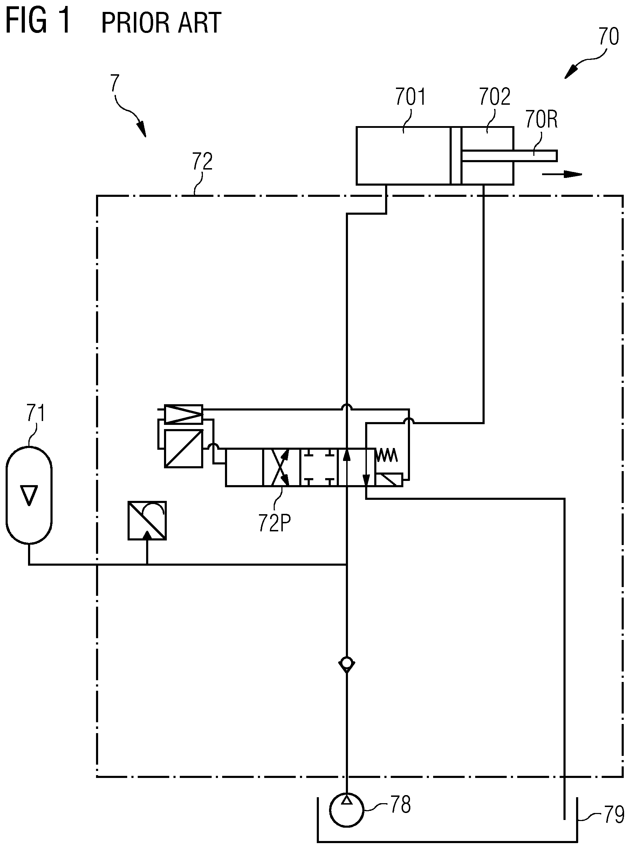

Figure 1 illustrates a known configuration. The diagram shows a pitch cylinder 70 in a hydraulic circuit 72 of a pitch system for the rotor blades 20 of a wind turbine. Each rotor blade 20 is turned by one or more hydraulic cylinders 70 or "pitch cylinders". A pitch cylinder 70 comprises a cylinder barrel with a cap-end chamber 701 and a rod-end chamber 702, separated by a piston which can be caused to move back and forth. A piston rod 70R is connected between the piston and a linkage which converts the linear displacement of the piston rod 70R to rotation of the rotor blade 20.

The flow direction of the hydraulic fluid, and therefore the direction of movement of the piston rod 70R, is managed by a pitch controller which receives a pitch reference from a wind turbine controller and which opens/closes specific valves of the hydraulic circuit 72 as required in order to turn the rotor blade 20 to track the pitch reference. The piston rod 70R is retracted by forcing pressurized hydraulic fluid into the rod-end chamber 702 while allowing fluid to exit the cap-end chamber 701. Similarly, the piston rod 70R is moved outward by forcing pressurized hydraulic fluid into the cap-end chamber 701 while allowing fluid to exit the rod-end chamber 702.

In this configuration, oil exiting a chamber 701, 702 is collected in a tank 79, and a pump 78 is deployed to return the oil to the accumulator 71. This design requires relatively large "normal operation" accumulators 71, which add significantly to the overall cost of manufacture.

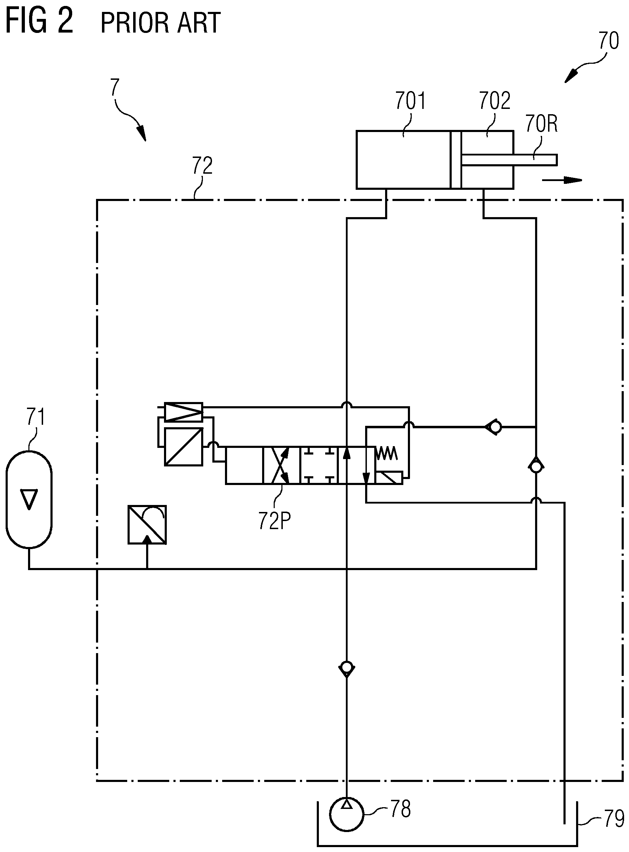

Figure 2 shows a known improvement to the configuration of Figure 1. Here, the accumulator 71 of a hydraulic circuit 72 is kept favourably compact by returning oil directly from the rod-end chamber 702 to the accumulator 71 when pitching out (as indicated by the arrow). This is made possible by the check valve 721V in a fluid line between the rod-end chamber 702 and the accumulator 71. When fluid is forced into the cap-end chamber 701, fluid from the rod-end chamber 702 cannot immediately exit because the pressure at the outlet of the check valve 721V is initially the same as the accumulator pressure, for example 250 bar, i.e. the check valve 721V initially prevents fluid flow from the rod-end chamber 702 back to the accumulator 71. A further check valve prevents flow from the rod-end chamber to the tank via the proportional valve.

When pitching out, pressure therefore builds up in the rod-end chamber 702 until the pressure differential across the check valve 721V reaches or exceeds its cracking pressure, for example 10 bar. Fluid can now pass from the rod-end chamber 702 directly back to the accumulator 71. In this "regenerative mode", oil is returned directly to the accumulator 71. This has the advantage of allowing a favourably compact accumulator design for the required travel. A compact accumulator is advantageous as regards lowering the cost of the pitch system. As explained above, optimizing the accumulator size comes at the cost of reduced torque capacity.

While the reduced torque capacity does not generally present a problem, a low torque output when pitching out may - under certain circumstances - result in a situation that causes the wind turbine controller to respond by initiating a shutdown procedure. For example, sudden high wind speeds may require that the rotor blades be immediately pitched out of the wind towards their "stop" positions, but a powerful gust may strike the rotor blades while these are being pitched out. Such a wind gust places a very high external load on the pitch system, which is already working to quickly pitch the rotor blades. In a worst case scenario, the rotor blades may need to be pitched over their complete angular range. The insufficient torque output of the pitch cylinders may result in an unacceptable pitch tracking error in one or more rotor blades, causing the wind turbine controller to initiate shutdown. When an emergency shutdown is initiated by the wind turbine controller, power is removed from the hydraulic system so that all valves assume their default states, thereby pitching the rotor blades to their "stop" positions. While in shutdown, the wind turbine cannot export power. If such events occur relatively often, the accumulated loss of earnings can be considerable.

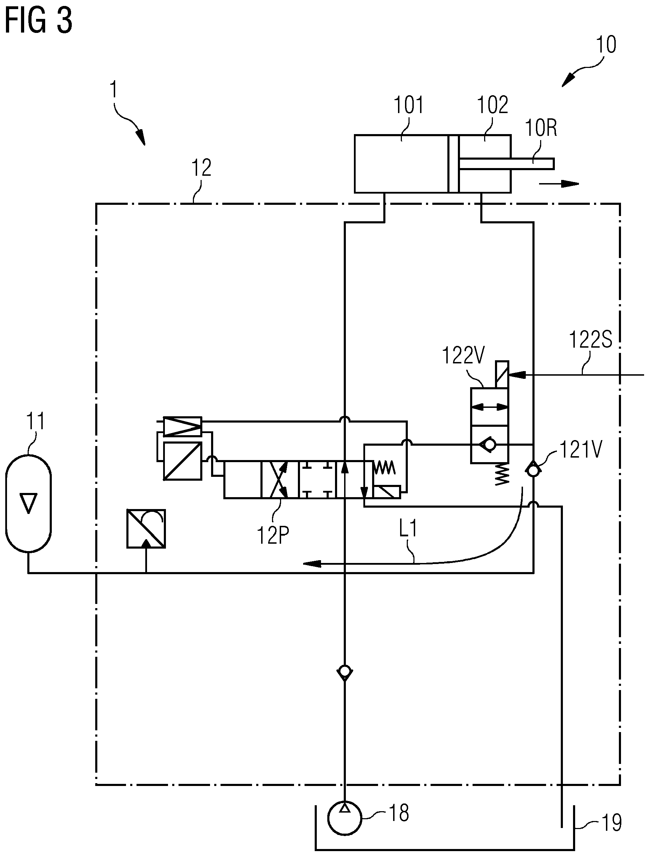

Figure 3 shows an exemplary embodiment of the inventive rotor blade pitch system 1. The hydraulic circuit 12 is similar in principle to the configurations of Figure 2, with a check valve 121V to allow oil to return directly to the accumulator 11 from the rod-end chamber 102 when the rotor blade 20 is being pitched out. Pitching in and pitching out of the rotor blades 20 is done in response to pitch references issued by a wind turbine controller 2C, which are received by the pitch controller 1C and converted into appropriate control signals for the elements of the hydraulic circuits.

The check valve 722V of Figure 2 is replaced by a mode-select valve 122V that is actively controlled by an input signal 122S, for example a 2-2 directional control valve which can be opened or closed in response to the control signal 122S. The default state of the mode-select valve 122V is to check or inhibit fluid flow as shown here, and the circuit performs in the same manner as the circuit of Figure 2, allowing oil from the rod-end chamber 102 to return to the accumulator 11 via the primary return line L1 in a "regenerative mode" when the rotor blade is pitching out.

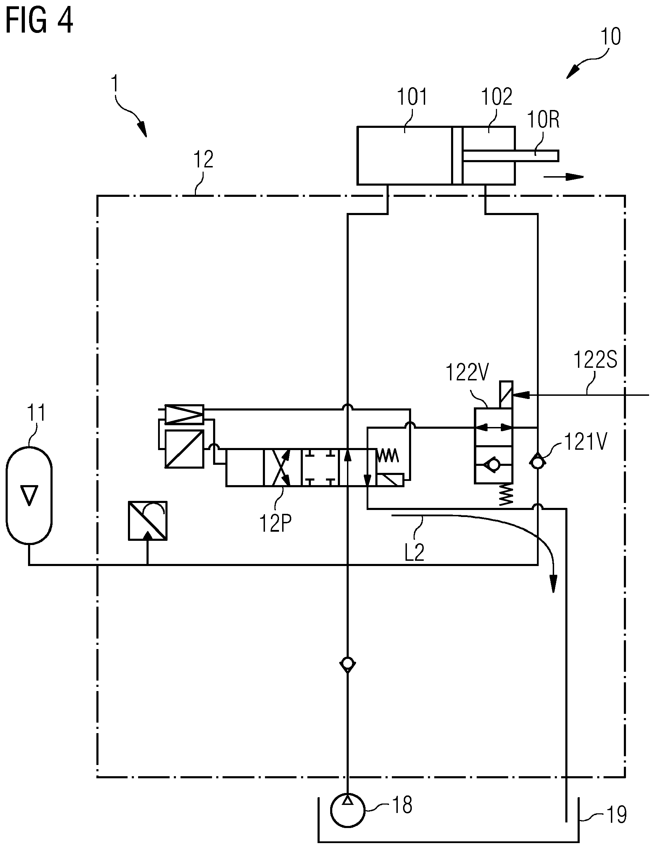

When the wind turbine controller 2C detects a highly-loaded situation such as sudden gusts while pitching out, it informs the pitch controller 1C, which responds by opening the mode-select valve 122V as shown in Figure 4, placing the hydraulic circuit into "non-regenerative mode". Here, the opened mode-select valve 122V allows oil to immediately exit the rod-end chamber 102, and to flow via the proportional valve 12P to the tank 19 via the secondary return line L2. This results in a favourably high pressure differential from cap-end chamber 101 to rod-end chamber 102, significantly increasing the output torque of the cylinder 10. During a highly-loaded situation as described above, the pitch system 1 is able to rapidly pitch a rotor blade 20 out of the wind while consistently delivering the required output torque. Even in very unfavourable conditions, the invention ensures correct pitch tracking over the entire angular range of each rotor blade, so that the wind turbine controller 2C will not initiate shutdown because of a pitch tracking error.

The invention therefore exploits the benefits of the "regenerative mode" configuration, i.e. the normal-operation accumulators 11 can be favourably compact in size; but also enables the hydraulic cylinder(s) 10 of each rotor blade to deliver high torque output when needed.

Figure 4 illustrates one approach to controlling the hydraulic circuit 12 of Figure 3. The diagram shows a pitch reference curve 40, i.e. a series of pitch references issued by the wind turbine controller 2C. The diagram also shows a pitch position curve 41, i.e. a series of the measured or actual rotor blade pitch positions. The actual pitch position of a rotor blade can be determined in various ways, as will be known to the skilled person. Ideally, the actual rotor blade pitch position closely tracks or follows the pitch reference, so that the difference remains below an acceptable threshold.

When a pitch system develops an actual fault, this can manifest as an unacceptably high tracking error and the wind turbine controller can initiate shutdown to pre-empt damage to the rotor blades and other components.

In the fault-free but unfavourable high-loading scenario as described above, the pitch cylinder 10 may be unable to deliver sufficient torque in regenerative mode MR, and the rotor blade pitch position would start to drift further from the pitch reference. To avoid shutdown resulting from the pitch error, the wind turbine controller 2C can command the pitch controller to exit regenerative mode MR and enter non-regenerative mode MNR. In response, the pitch controller 1C opens the mode select valve 122V. The drop in rod-end pressure increases the cylinder's output torque, thereby turning the rotor blade to correctly track the pitch reference 40. As soon as the pitch error is reduced to an acceptable level ΔOK, the wind turbine controller 2C can command the pitch controller 1C to return to regenerative mode MR (by closing the mode-select valve 122V). In this way, the inventive hydraulic circuit 12 enables the pitch system 1 to complete each pitching-out sequence as intended. With its rotor blades safely pitched out of the wind, the wind turbine can continue to operate in idle mode until conditions improve, when the rotor blades can once again be pitched into the wind.

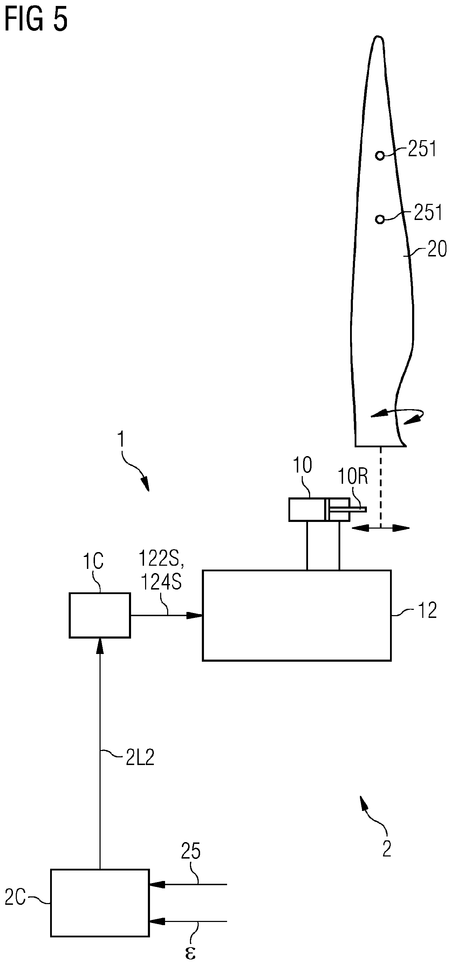

Figure 5 is a block diagram to illustrate the invention. Here, the wind turbine controller 2C monitors rotor blade loads 25 which can estimated from data provide by strain sensors 251 (mounted at suitable positions on the rotor blades), a gust detector (configured to detect and measure the strength of wind gusts on the rotor blades), etc. The wind turbine controller 2C issues pitch references to the pitch controllers 1C of the rotor blades 20 (one rotor blade 20 and its pitch controller 1C are indicated in the drawing), and generally also monitors the pitch error ε of each rotor blade 20.

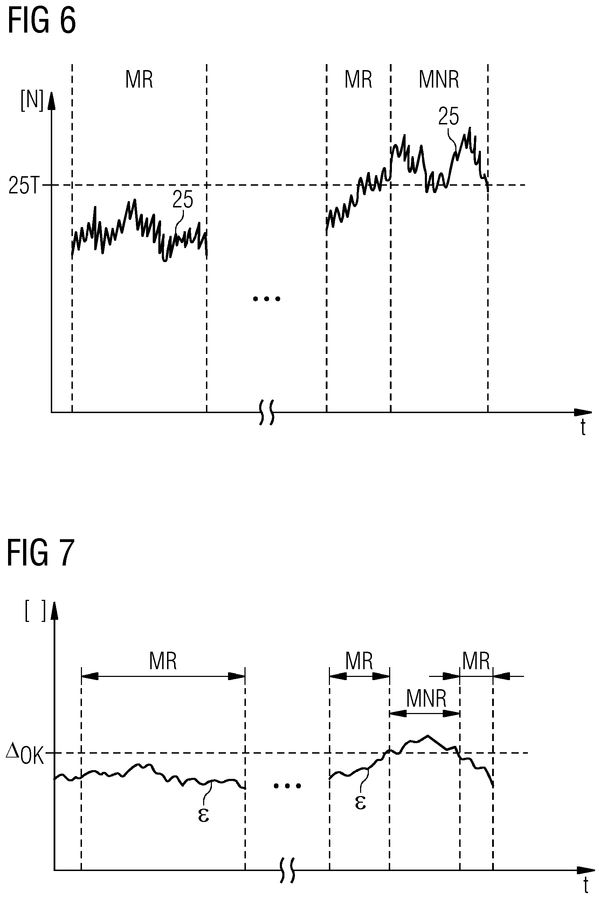

During pitching-out, as long as the measured loads 25 for a rotor blade remain below a load threshold 25T as indicated in Figure 6, the corresponding hydraulic circuit 1 can remain in regenerative mode MR for the entire pitching-out procedure. However, if the rotor blade loads 25 follow an unexpected pattern and/or exceed the load threshold 25T, the wind turbine controller 2C can issue a command 2L2 to the pitch controller 1C, instructing the hydraulic circuit 1C to enter non-regenerative mode MNR, i.e. to actuate the line opening means in order to open the secondary return line L2, so that the pitch cylinder 10 can deliver the necessary output torque to complete the pitching-out procedure for that rotor blade.

Figure 7 illustrates the inventive approach in response to pitch tracking error ε of a rotor blade 20. In a first pitching-out task as shown on the left, the hydraulic cylinder 12 arrangement of the rotor blade 20 is able to provide the necessary output torque, and the pitching-out task can be performed entirely in regenerative mode MR. In a subsequent pitching-out task as shown on the right, the pitch error ε is initially acceptable, but eventually the hydraulic cylinder 12 arrangement can no longer provide the necessary output torque, for example because of excessive loading on the rotor blade, and the pitch error ε increases beyond an acceptable threshold Δ_{OK}. The wind turbine controller 2C responds by commanding the pitch system 1 to put the corresponding hydraulic circuit 12 in non-regenerative mode MNR in order to quickly obtain the required output torque. If the pitch error ε subsequently drops below the acceptable threshold Δ_{OK}, the wind turbine controller 2C can respond by commanding the pitch system 1 to return the hydraulic circuit 12 to regenerative mode MR in order to efficiently replenish the accumulator 11.

In the fault-free but unfavourable high-loading scenario as described above, the pitch cylinder 10 may be unable to deliver sufficient torque in regenerative mode MR, and the rotor blade pitch position would start to drift further from the pitch reference. To avoid shutdown resulting from the pitch error, the wind turbine controller 2C can command the pitch controller to exit regenerative mode MR and enter non-regenerative mode MNR. In response, the pitch controller 1C opens the mode select valve 122V. The drop in rod-end pressure increases the cylinder's output torque, thereby turning the rotor blade to correctly track the pitch reference 40. As soon as the pitch error is reduced to an acceptable level ΔOK, the wind turbine controller 2C can command the pitch controller 1C to return to regenerative mode MR (by closing the mode-select valve 122V). In this way, the inventive hydraulic circuit 12 enables the pitch system 1 to complete each pitching-out sequence as intended.

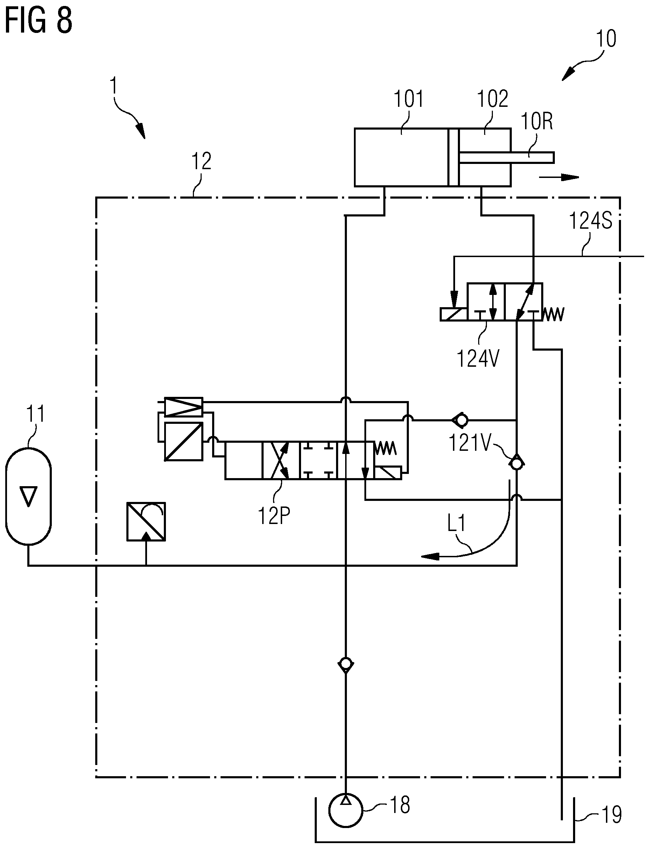

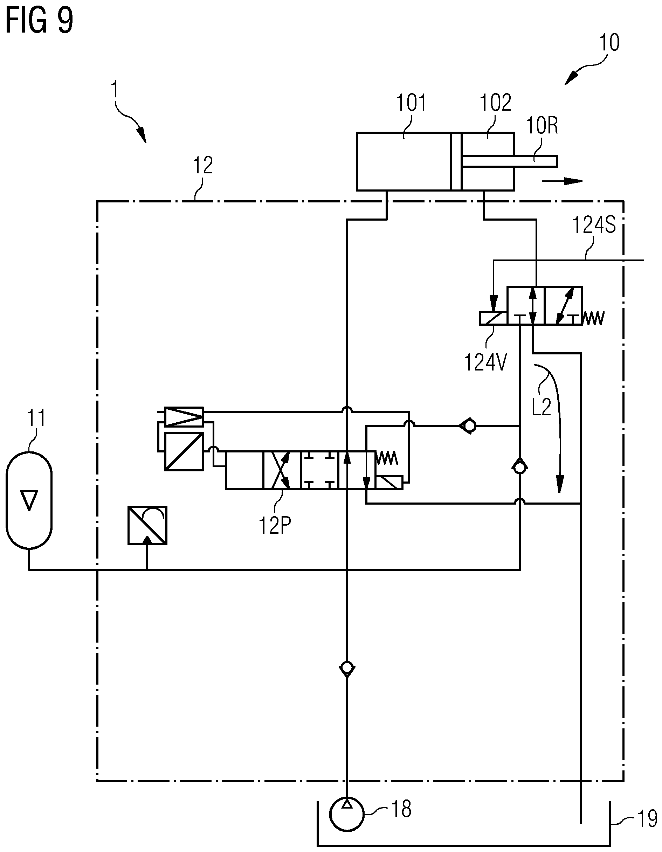

Figures 8 and 9 illustrate an alternative embodiment of the inventive pitch system 1 in which the secondary return line L2 is provided in a different manner. Instead of including the proportional valve 12P as shown in the embodiment of

Figures 3 and 4, the secondary return line L2 in this case is independent of the proportional valve 12P. To this end, a fluid line of the rod-end chamber 102 splits into two fluid paths, each of which can be opened/closed by means of a 3-2directional valve 124V which can be actuated in response to a control signal 124S. As shown in Figure 8, the valve 124V can be opened to allow fluid to enter the rod-end chamber 102 (while pitching in) or to allow fluid to return to the accumulator 11 via a check valve 121V and the primary return line L1 when pitching out in regenerative mode. Figure 9 shows how the valve 124V can be actuated to open the secondary return line L2 in order to allow the rod-end chamber 102 to empty quickly into the tank 19 if additional output torque is required during the pitching out procedure.

Although the present invention has been disclosed in the form of preferred embodiments and variations thereon, it will be understood that numerous additional modifications and variations could be made thereto without departing from the scope of the invention. For example, ...

For the sake of clarity, it is to be understood that the use of "a" or "an" throughout this application does not exclude a plurality, and "comprising" does not exclude other steps or elements.

## Claims

1. A wind turbine rotor blade pitch system (1) comprising, for each rotor blade (20) of a wind turbine (2):
- a hydraulic cylinder (10) and a means of converting a linear displacement of the cylinder piston rod (10R) into a rotational displacement of that rotor blade (20);
- an accumulator (11) adapted to provide pressurised hydraulic fluid to the cap-end chamber (101) of the hydraulic cylinder (10) or to the rod-end chamber (102) of the hydraulic cylinder (10); and
- a hydraulic circuit (12) comprising
- a primary return line (L1) connecting the rod-end chamber (102) to the accumulator (11);
- a secondary return line (L2) connecting the rod-end chamber (102) to a fluid reservoir (19); and
- a means (122V, 124V) of opening the secondary return line (L2) to divert hydraulic fluid to the fluid reservoir (19);
which pitch system (1) further comprises a pitch controller (1C) adapted to actuate the line opening means (122V, 124V) of a hydraulic circuit (12).

2. A pitch system according to the preceding claim, wherein the line opening means is an actuatable valve (122V, 124V) arranged in the secondary return line (L2).

3. A pitch system according to the preceding claim, wherein the actuatable valve (122V, 124V) is a directional valve (122V, 124V) configured to divert hydraulic fluid from the rod-end chamber (102) to the primary return line (L1) or to the secondary return line (L2).

4. A pitch system according to any of the preceding claims, wherein the hydraulic circuit (12) comprises a proportional valve (12P) arranged to control the direction of linear displacement of the cylinder piston rod (10R).

5. A pitch system according to the preceding claim, wherein the line opening means (122V) is arranged between the rod-end chamber (102) and the proportional valve (12P).

6. A pitch system according to any of the preceding claims, comprising a check valve (121V) arranged in the primary return line (L1), with a cracking pressure in the order of 10 bar.

7. A pitch system according to any of the preceding claims, wherein the pitch controller (1C) is adapted to actuate the line opening means (122V, 124V) of a hydraulic circuit (12) in response to a command (2L2) received from a wind turbine controller (2C).

8. A method of controlling a wind turbine rotor blade pitch system (1) according to any of claims 1 to 7, which method comprises
- monitoring the pitch error (ε) of a rotor blade (20); and
- regulating the secondary return line (L2) of the hydraulic circuit (12) of that rotor blade (20) on the basis of the pitch error (ε).

9. A method according to the preceding method claim, comprising a step of estimating loads on a rotor blade (20) and regulating the secondary return line (L2) of the hydraulic circuit (12) of that rotor blade (20) on the basis of the estimated loads (25).

10. A method according to any of the preceding method claims, wherein the step of regulating the secondary return line (L2) of a hydraulic circuit (12) comprises opening that secondary return line (L2) when the estimated loads (25) for that rotor blade (20) exceed a load threshold (25T) during a pitching-out task and/or when the pitch error (ε) of that rotor blade (20) exceeds an error threshold (ΔOK) during a pitching-out task.

11. A method according to any of the preceding method claims, wherein the step of regulating the secondary return line (L2) of a hydraulic circuit (12) comprises maintaining that secondary return line (L2) in a closed state when the estimated loads (25) on the corresponding rotor blade (20) are below the load threshold (25T).

12. A wind turbine (2) comprising
- a number of rotor blades (20);
- a rotor blade pitch system (1) according to any of claims 1 to 7; and
- a wind turbine controller (2C) configured to issue commands to the pitch system (1) during operation of the wind turbine (2).

13. A wind turbine according to the preceding claim, wherein the wind turbine controller (2C) is configured to command a pitch controller (1C) to actuate the line opening means (122V, 124V) of a hydraulic circuit (12).

14. A wind turbine according to any of claims 12 to 13, comprising a strain sensor arrangement (25) adapted to estimate loads on the rotor blades (20), and wherein the wind turbine controller (2C) is configured to command a pitch controller (1C) to actuate the line opening means (122V, 124V) on the basis of the estimated loads (25).

15. A wind turbine according to any of claims 12 to 14, comprising a gust detector arranged to detect gust loads acting on the rotor blades (20), and wherein the wind turbine controller (2C) is configured to command a pitch controller (1C) to actuate the line opening means (122V, 124V) on the basis of the estimated loads (25).
